# EUROPÄISCHE PATENTSCHRIFT

(11) **EP 1 169 263 B1**
(45) Veröffentlichungstag und Bekanntmachung des Hinweises auf die Patenterteilung: **23.11.2005**
(21) Anmeldenummer: 99955727.5
(22) Anmeldetag: 17.09.1999
(51) Int. Cl.: C01B 3/00, C22C 32/00, C22C 1/10, H01M 4/24, H01M 4/38

(54) **METALLHALTIGER WASSERSTOFFSPEICHERWERKSTOFF UND VERFAHREN ZU SEINER HERSTELLUNG**
METALLIFEROUS STORAGE MATERIAL FOR HYDROGEN AND METHOD FOR PRODUCING SAME
MATERIAU METALLIFERE ACCUMULATEUR D'HYDROGENE ET SON PROCEDE DE FABRICATION

(30) Priorität: 26.03.1999 DE 19913714; 26.03.1999 DE 19915142
(43) Veröffentlichungstag der Anmeldung: 09.01.2002
(73) Patentinhaber: GKSS-Forschungszentrum Geesthacht GmbH, 21502 Geesthacht (DE); GfE Metalle und Materialien GmbH, 90431 Nürnberg (DE)
(72) Erfinder: KLASSEN, Thomas, D-21033 Hamburg (DE); BORMANN, Rüdiger Prof. Dr. rer. nat., 21224 Rosengarten (DE); OELERICH, Wolfgang, D-65191 Wiesbaden (DE); GÜTHER, Volker, D-90559 Burgthann (DE); OTTO, Andreas, D-90766 Fürth (DE)
(74) Vertreter: UEXKÜLL & STOLBERG
(86) Internationale Anmeldenummer: PCT/DE1999/002974
(87) Internationale Veröffentlichungsnummer: WO 2000/058206

(56) Entgegenhaltungen:
- EP-A- 0 184 427
- EP-A- 0 840 385
- DE-A- 3 535 378

## Beschreibung

Die Erfindung betrifft einen metallhaltigen Werkstoff als hydridbildender Werkstoff in Wasserstoff-Speichern und ein Verfahren zu seiner Herstellung.

Voranstehend sei darauf hingewiesen, daß hier unter dem Betriff metallhaltiger Werkstoff atomare Metalle, Metallegierungen, intermetallische Phasen von Metallen oder Verbundwerkstoffe sowie entsprechende Hydride verstanden werden sollen.

Aus der EP-A-0 840 385 ist eine wasserstoffspeichernde Legierung sowie eine Elektrode bekannt, bei der die wasserstoffspeichernde Legierung verwendet wird. Diese bekannte Legierung weist als Zusätze Oxide der Metalle der Seltenen Erden bzw. Oxide der Lanthaniden auf. Ziel dieser Oxide der Seltenen Erden bzw. der Oxide der Lanthaniden soll es sein, den Elektrodengrundwerkstoff vor Oxidation und Korrosion zu schützen und eine entsprechende Oxidschutzschicht auszubilden.

Es ist bekannt, daß auf der Basis von reversiblen Metallhydriden Wasserstoff-Speicher, sogenannte Hydridspeicher, gebildet werden können. Hierbei wird durch Wärmeabgabe der Speicher geladen, d.h. Wasserstoff wird durch Chemiesorption gebunden und durch Wärmezufuhr wieder entladen. Wasserstoff-Speicher können somit hervorragende Energiespeicher für mobile und/oder stationäre Anwendungen bilden, d.h. diese würden, da bei der Entladung der Wasserstoff-Speicher keine schädlichen Emissionen frei werden, in Zukunft ein beachtliches Speicherpotential bilden.

Gut geeignet für derartige Hydridspeicher sind sogenannte nanokristalline Hydride, die sich durch eine schnelle Wasserstoffaufnahme- und Abgabekinetik auszeichnen. Allerdings ist ihre Herstellung bislang sehr aufwendig. Bisher wurden dazu zunächst durch Hochenergiemahlen aus elementaren Komponenten oder Vorlegierungen nanokristalline Legierungen hergestellt, wobei die Mahldauern sehr lang sein können. In einem abschließenden Prozeßschritt wurden diese nanokristallinen Legierungen einer unter Umständen mehrstufigen Wärmebehandlung unter hohem Wasserstoffdruck unterzogen und auf diese Weise hydriert. Für viele Legierungen ist darüber hinaus eine mehrfache Be- und Entladung von Wasserstoff notwendig, um die volle Kapazität zu erreichen.

Alternativ wurde versucht die entsprechenden Hydride durch Mahlen unter Wasserstoffatmosphäre oder auf rein chemischen Wege zu synthetisieren. Dabei zeigte sich alerdings, daß die Ausbeute an den gewünschten Hydriden geringer ist und zum Teil zusätzliche unerwünschte Phasen auftreten.

Weiterhin waren bzw. sind bestimmte Phasen mit diesen bekannten konventionellen Methoden überhaupt nicht darstellbar.

In der DE-A-197 58 384 ist ein Verfahren zur Herstellung nanokristalliner Metallhydride beschrieben worden, mit dem eine Herstellung von stabilen und metastabilen Hydriden oder Hydriden metastabiler Legierungen möglich ist, und zwar mit einer sehr hohen Ausbeute bis in den Bereich zu 100 %. Das in der vorgenannten deutschen Patentanmeldung beschriebene Verfahren ist unter verhältnismäßig einfach beherrschbaren Randbedingungen durchführbar und mit verhältnismäßig geringer Energiezufuhr betreibbar.

Um bei einem derartigen Wasserstoff-Speicher im Bedarfsfalle sehr schnell die gespeicherte Energie zur Verfügung zu haben und den Wasserstoff-Speicher auch schnell mit Energie laden zu können, ist es erstrebenswert, die Reaktionsgeschwindigkeit bei der Hydrierung und Dehydrierung von Metallen bei niedriger Temperatur sehr hoch zu halten bzw. eine sehr hohe Reaktionsgeschwindigkeit anzustreben.

Bisher wurde dazu die Reaktionsfläche durch Verkleinerung der Korn-/Kristallidgröße der zu hydrierenden bzw. dehydrierenden Materialien soweit wie technisch möglich erhöht. Andere Maßnahmen zur Erhöhung der Reaktionsgeschwindkeit war die Zugabe von Metall wie Nickel, Platin oder Palladium.

Der Nachteil 1 der bisher bekannten Maßnahmen zur Erhöhung der Reaktionsgeschwindkeit bei der Hydrierung und insbesondere bei der Dehydrierung, d.h. der Bereitstellung von Wasserstoff aus dem Wasserstoff-Speicher, ist der, daß diese für technische Anwendungen wie technisch nutzbare Wasserstoff-Speicher nicht ausreichen.

Es ist somit Aufgabe der vorliegenden Erfindung einen metallhaltigen Werkstoff wie ein Metall, eine Metallegierung, eine intermetallische Phase, Verbundwerkstoffe aus Metallen sowie entsprechende Hydride zu schaffen, mit denen die Reaktionsgeschwindigkeit beim Hydrieren und Dehydrieren so hoch ist, daß diese technisch als Energiespeicher nutzbar sind, wobei ein Verfahren zur Herstellung eines metallhaltigen Werkstoffes wie eines Metalls, einer Metallegierung, einer intermetallischen Phase, eines Verbundwerkstoffes aus diesen Materialien einfach und kostengünstig durchführbar sein soll oder entsprechende Hydride, so daß derart hergestellte Metalle in großtechnischem Maße als Wasserstoff-Speicher kostengünstig eingesetzt werden können, bei denen die technisch erforderliche hohe Reaktionsgeschwindigkeit bei der Hydrierung und Dehydrierung gewährleistet ist.

Gelöst wird die Aufgabe im Hinblick auf den metallhaltigen Werkstoff als hydridbildenden Werkstoff in Wasserstoff-Speichern dadurch, daß dieser zur Hydrierung oder Dehydrierung des Wasserstoffspeicherwerkstoffs wenigstens ein Metalloxid als Katalysationsmittel enthält und wobei das Metall des Metalloxids Mg, Ca, Ti, V, Cr, Mn, Fe, Co, Ni, Cu, Zn, Zr, Nb, Mo, Sn, Hf, Ta und W ist und daß das Katalysationsmittel eine nanokristalline Struktur aufweist.

Dabei wurde sich erfindungsgemäß zu Nutze gemacht, daß im Vergleich zu reinen Metallen Metalloxide spröde sind, wodurch eine kleinere Partikelgröße und eine homogene Verteilung im erfindungsgemäßen Werkstoff erreicht wird, was zur Folge hat, daß die Reaktionskinetik gegenüber metallischen Katalysatoren erheblich erhöht wird. Ein weiterer Vorteil ist, daß Metalloxide als Katalysationsmittel regelmäßig sehr viel preisgünstiger bereitstellbar sind als Metalle bzw. Metallegierungen, so daß auch das erfindungsgemäß angestrebte Ziel einer preisgünstigen großtechnischen Bereitstellbarkeit derartiger erfindungsgemäßer metallhaltiger Werkstoffe erreicht wird.

Grundsätzlich ist das Metalloxid ein Oxid atomaren Metalls, beispielsweise das Oxid der Metalle Mg, Ca, Sc, Ti, V, Cr, Mn, Fe, Co, Ni, Cu, Zn, Zr, Nb, Mo, Sn, Hf, Ta, W. Gemäß einer vorteilhaften Ausgestaltung der Erfindung kann das Metalloxid aber auch aus Mischoxiden der Metalle, insbesondere der voraufgeführten Metalle, oder aus Gemischen der Metalloxide bestehen.

Gemäß einer vorteilhaften Ausführungsform der Erfindung weist das Metall eine nanokristalline Struktur auf, wobei gleichermaßen auch vorteilhafterweise das Katalysationsmittel eine nanokristalline Struktur aufweisen kann. Weist das Metall und/oder das Katalysationsmittel eine nanokristalline Struktur auf, so wird dadurch die Reaktionsoberfläche und somit die Reaktionsgeschwindigkeit der Hydrierung bzw. Dehydrierung des metallhaltigen Werkstoffes erhöht.

Das erfindungsgemäße Verfahren zur Herstellung eines metallhaltigen Werkstoffes als hydridbildender Werkstoff in Wasserstoff-Speichern zeichnet sich dadurch aus, daß ein metallhaltiger Werkstoff und/oder ein Katalysationsmittel, das wenigstens ein Metalloxid ist, und wobei das Metall des Metalloxids Mg, Ca, Ti, V, Cr, Mn, Fe, Co, Ni, Cu, Zn, Zr, Nb, Sn, Hf, Ta und W ist, zum Erhalt eines Metallpulvers derart einem mechanischen Mahlvorgang unterworfen wird bzw. werden, daß der metallhaltige Werkstoff und/oder das Katalysationsmittel eine nanokristalline Struktur erhält bzw. erhalten.

Der Mahlvorgang selbst kann in Abhängigkeit des metallhaltigen Werkstoffs und/oder des Katalysationsmittels unterschiedlich lang gewählt werden, um die optimal angestrebte Reaktionsoberfläche und optimale Verteilung des Katalysators des erfindungsgemäßen metallhaltigen Werkstoffs zu erreichen.

Dabei kann es vorteilhaft sein, daß der metallhaltige Werkstoff selbst zunächst dem Mahlvorgang unterworfen wird und nachfolgend ebenfalls das Katalysationsmittel zugegeben und dem weiteren Mahlvorgang unterworfen wird, es kann aber auch vorteilhafterweise umgekehrt verfahren werden, d.h. daß zunächst das Katalysationsmittel dem Mahlvorgang unterworfen wird und nachfolgend ebenfalls der metallhaltige Werkstoff. Auch diese jeweils unterschiedlich möglichen Vorgehensweisen beim Mahlvorgang werden in Abhängigkeit des metallhaltigen Werkstoffs und in Abhängigkeit des zuzusetzenden Katalysationsmittels gewählt werden.

Um zu verhindern, daß Reaktionen mit dem Umgebungsgas während des Mahlvorganges des metallhaltigen Werkstoffs (Metall, Metalllegierung, intermetallische Phase, Verbundwerkstoff sowie deren Hydride) vonstatten gehen, wird das Verfahren vorzugsweise derart ausgeführt, daß der Mahlvorgang unter einer Inertgasatmosphäre durchgeführt wird, wobei das Inertgas vorzugsweise Argon ist.

Wie schon erwähnt, ist die Dauer des Mahlvorganges für den metallhaltigen Werkstoff (Metall, Metallegierung, intermetallische Phase, Verbundwerkstoff sowie deren Hydride) und das Katalysationsmittel in Abhängigkeit des metallhaltigen Werkstoffs und des gewählten Katalysa-tionsmittels variabel wählbar. Vorzugsweise liegt die Dauer des Mahlvorganges im Bereich von etwa 1 bis 200 Stunden.

Bei einer weiteren Art des Verfahrens zur Herstellung eines metallhaltigen Werkstoffs, der als hydridbildender Elektrodenwerkstoff für Primär- und Sekundärelemente herangezogen bzw. verwendet werden kann, wird wenigstens ein Metalloxid wenigstens auf der Oberfläche des Elektrodenwerkstoffs in situ durch Kontakt mit Sauerstoff aus Elementen des Elektrodenwerkstoffs oder durch direkte Zufuhr von Sauerstoff gebildet. Auch auf diese Weise kann somit ein katalysierendes Oxid in situ aus Elementen des Hydridspeicherwerkstoffs gebildet werden.

Vorteilhafterweise wird bei der Ausführung des Verfahrens die Oberfläche des Elektrodenwerkstoffs vor Ausbildung des Oxids entweder chemisch und/oder mechanisch aktiviert, wodurch die Oxidbildung des Metalls nochmals verbessert werden kann.

Die Erfindung wird nun unter Bezugnahme auf verschiedene Diagramme, die das Hydrierungs- und Dehydrierungsverhalten sowie andere wichtige Parameter zeigen, im einzelnen beschrieben. Darin zeigen:
- Fig. 1: ein Röntgenbeugungsdiagramm nach einer Mahldauer des metallhaltigen Werkstoffs von 1 Stunde und 200 Stunden,
- Fig. 2a: eine Darstellung des Sorptionsverhaltens des metallhaltigen Werkstoffs zur Darstellung der Ladetemperatur und Ladegeschwindigkeit mit Wasserstoff,
- Fig. 2b: das Sorptionsverhalten des metallhaltigen Werkstoffs bei einer anderen Temperatur in Abhängigkeit von der Ladezeit,
- Fig. 2c: einen Druckverlauf bei Magnesium-Wasserstoff zur Darstellung eines maximalen Wasserstoffgehalts des metallhaltigen Werkstoffs,
- Fig. 3: Röntgenbeugungsbilder, aus denen im hydrierten wie im dehydrierten Zustand der Katalysator Cr₂ O₃, aber auch Spuren von Mg0 und Cr sichtbar sind,
- Fig. 4a - 4d: eine Darstellung der erfindungsgemäß möglichen Verbesserung der Kinetik sowohl bei der Absorption von Wasserstoff wie auch bei dessen Desorption,
- Fig. 5: einen typischen Verlauf einer in den ersten 30 Lade- und Entladezyklen erzielten Ladekapazitäten einer unbehandelten AB₅ Hydridlegierung,
- Fig. 6: die Darstellung einer Aktivierung nach den ersten 5 Zyklen zur Sichtbarmachung einer nur unzureichenden Aktivierung,
- Fig. 7: einen entsprechenden Kurvenverlauf gemäß Fig. 5 mit einem Metalloxid gemäß der Erfindung katalysiert,
- Fig. 8: einen entsprechenden Kurvenverlauf gemäß Fig. 6 mit einem Metalloxid gemäß der Erfindung katalysiert,
- Fig. 9: den Verlauf der mit einer unbehandelten Legierung im 10. Zyklus erzielbaren Entladekapazitäten als Funktion der angelegten Entladeströme (bezogen auf 1g Legierung),
- Fig. 10: eine Darstellung, wie gemäß Fig. 9, jedoch im 30. Zyklus,
- Fig. 11: einen entsprechenden Kurvenverlauf derselben Legierung wie in Fig. 9, jedoch mit einem Metalloxid gemäß der Erfindung katalysiert, und
- Fig. 12: einen entsprechenden Kurvenverlauf derselben Legierung wie Fig. 10, jedoch mit einem Metalloxid gemäß der Erfindung katalysiert.

Der metallhaltige Werkstoff der Erfindung kann die verschiedensten Metalle, Metallegierungen, intermetallische Phasen, Verbundwerkstoffe und entsprechende Hydride umfassen. Diese bilden das Speichermaterial der erfindungsgemäßen Wasserstoff-Speicher. Zur Beschleunigung der Hydrierung oder Dehydrierung werden diesen metallhaltigen Werkstoffen als Katalysationsmittel Metalloxide zugesetzt, wobei das Metalloxid auch ein Mischoxid sein kann, d.h. mehrere Metalloxide enthalten kann. Metalloxide bzw. Mischoxide können beispielsweise aus Mg, Al, Si, Ca, Sc, Ti, V, Cr, Mn, Fe, Co, Ni, Cu, Zn, Y, Zr, Nb, Mo, Sn, Ce, La, Hf, Ta, W oder aus Seltenen Erden bestehen. Die vorangehende Aufzählung ist allerdings nicht so zu verstehen, daß diese eine Beschränkung der erfindungsgemäßen Metalloxide auf Oxide dieser Metalle sein soll. Oxide von Metallen können beispielsweise Al₂O₃, SiO₂, TiO₂, V₂O₅, Cr₂O₃, Fe₂O₃, Fe₃O₄, CuO, Nb₂O₅, MoO, MoO₂, usw... sein. Das Katalysationsmittel kann auch eine nanokristalline Struktur aufweisen.

Ein Verfahren zur Herstellung eines erfindungsgemäßen metallhaltigen Werkstoffs, wird anhand eines Beispieles beschrieben. Dabei wird auf die Figuren unmittelbar Bezug genommen.

### Beispiel

### MgH₂ + 5 Cr₂O₃

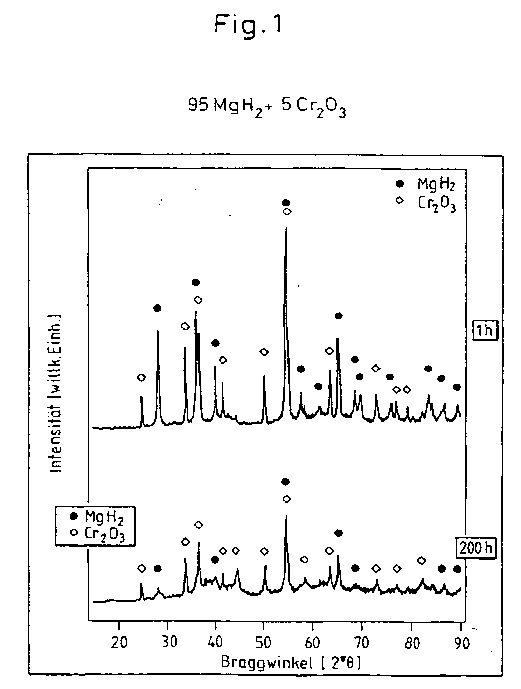

Experimentelle Einzelheiten: 30,7 g MgH₂ und 9,3 g Cr₂O₃ wurden in einem Molverhältnis von 19:1 in einem 250ml-Mahlbecher aus Stahl gegeben. Hinzugefügt wurden 400 g Stahlkugeln (Kugeldurchmesser 10 mm, Verhältnis Pulver : Kugeln = 1:10). Das Pulver wurde einem mechanischen Hochenergiemahlprozeß in einer Planetenkugelmühle vom Typ Fritsch Pulverisette 5 unterzogen. Der Mahlvorgang wurde unter einer Argonatatmosphäre für insgesamt 200 Stunden durchgeführt. Während und nach dem Mahlvorgang wurden geringe Mengen an Pulver für eine Röntgenstrukturanalyse entnommen. Fig. 1 zeigt die Röntgenbeugungsdiagramme nach einer Mahldauer von 1h und 200h. Neben dem MgH₂ ist auch nach 200h das Cr₂O₃ mittels Röntgenstrukturanalyse nachweisbar.

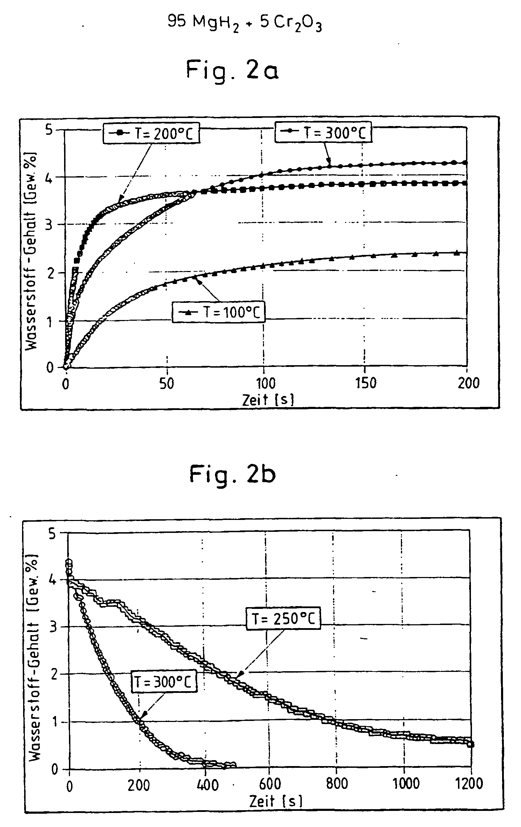

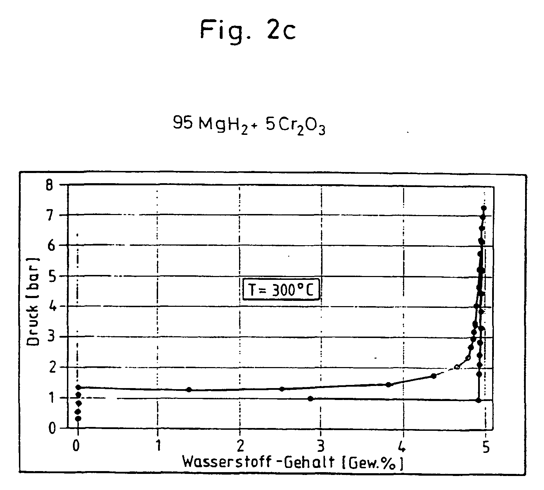

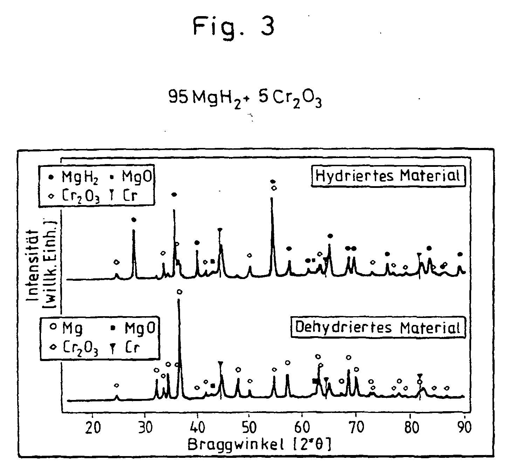

Sorptionsverhalten: Gemäß Fig. 2a kann das Material bei einer Temperatur von 300°C innerhalb von 100 s mit 4 gew. % Wasserstoff beladen werden. Bei T=250°C wird ein Wasserstoffgehalt von ca. 3,6 gew. % bereits nach ca. 50 s erreicht. Auch bei T=100°C ist eine schnelle Beladung möglich. Eine vollständige Wasserstoff-Entladung ist bei T=300°C nach ca. 400 s möglich. Bei T=250°C hingegen nach ca. 1200 s (vergleiche Fig. 2b). Auf dem PCT-Diagramm (Fig. 2c) ist neben dem Druckplateau von 1,6 bar, das dem System Magnesium-Wasserstoff zugeordnet werden kann, ein maximaler Wasserstoffgehalt des Materials von 5 gew. % zu erkennen. Auf Fig. 3 sind Röntgenbeugungsbilder dargestellt, auf denen im hydrierten wie dehydrierten Zustand neben Cr₂O₃ auch Spuren von Mg0 und eventuell Cr als inaktive Phase zu finden ist.

Desweiteren sind MgH₂ im hydrierten und Mg im dehydrierten Zustand nachweisbar.

### Vergleich von Magnesium + Chromoxid zu reinem Magnesium:

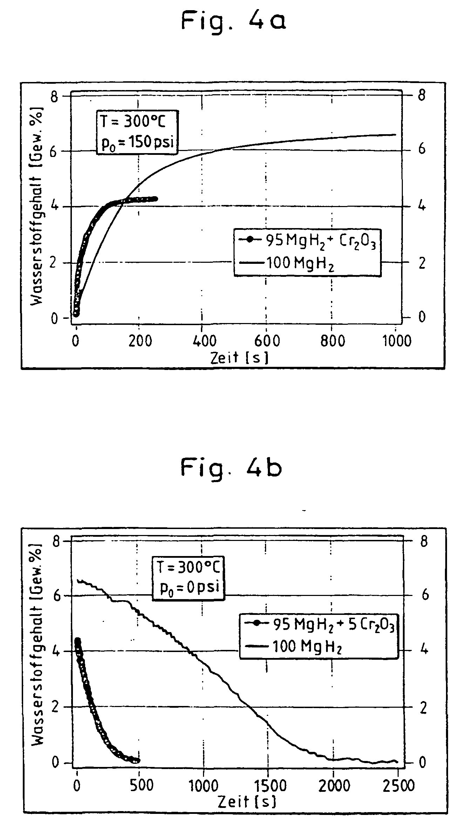

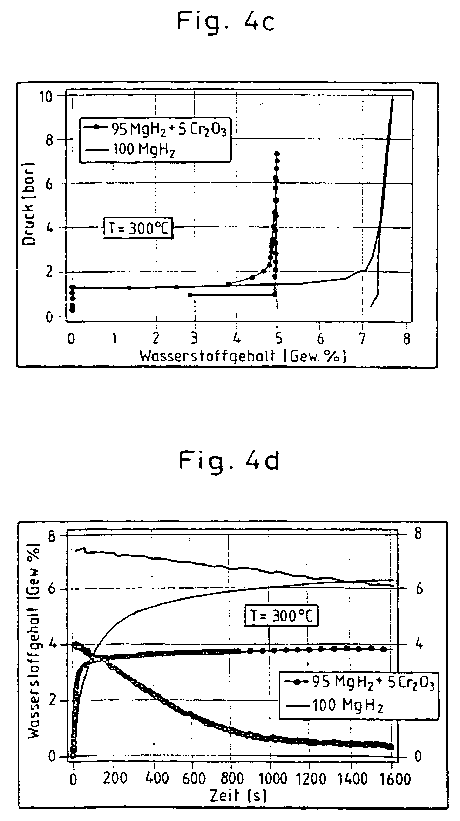

Gemäß Fig. 4a - d ist eine deutliche Verbesserung der Kinetik sowohl bei der Absorption von Wasserstoff wie auch bei dessen Desorption zu erkennen. Die dem gleichen Mahlprozeß unterzogenen Proben besitzen unterschiedliche Gesamtkapazitäten an Wasserstoff. 95 MgH₂ + 5 Cr₂O₃ kann 5 gew. % und 100 MgH₂ kann 7,6 gew. % Wasserstoff speichern. Dieses ist in den PCT-Diagrammen (Fig. 4c) wiedergegeben. Fig. 4a zeigt einer Erhöhung der Absorptionsgeschwindigkeit bei T=300°C um den Faktor 10. Bei einer Desorption wird bei gleicher Temperatur ein Geschwindigkeitsvorteil mit einem Faktor 6 erzielt (Fig. 4b). Das Material läßt sich bei T=250°C nach ca. 1200 s vollständig dehydrieren, wenn der Katalysator Cr₂O₃ hinzugegeben wird (Fig. 4d). Reines MgH₂ läßt sich bei T=250°C innerhalb moderater Zeiten nicht dehydrieren.

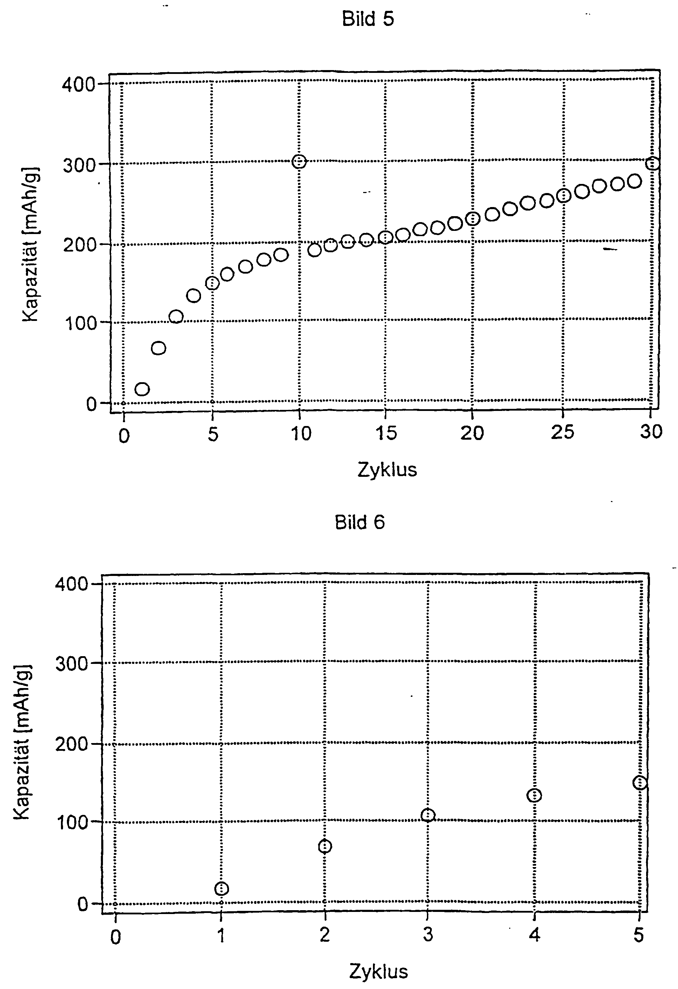

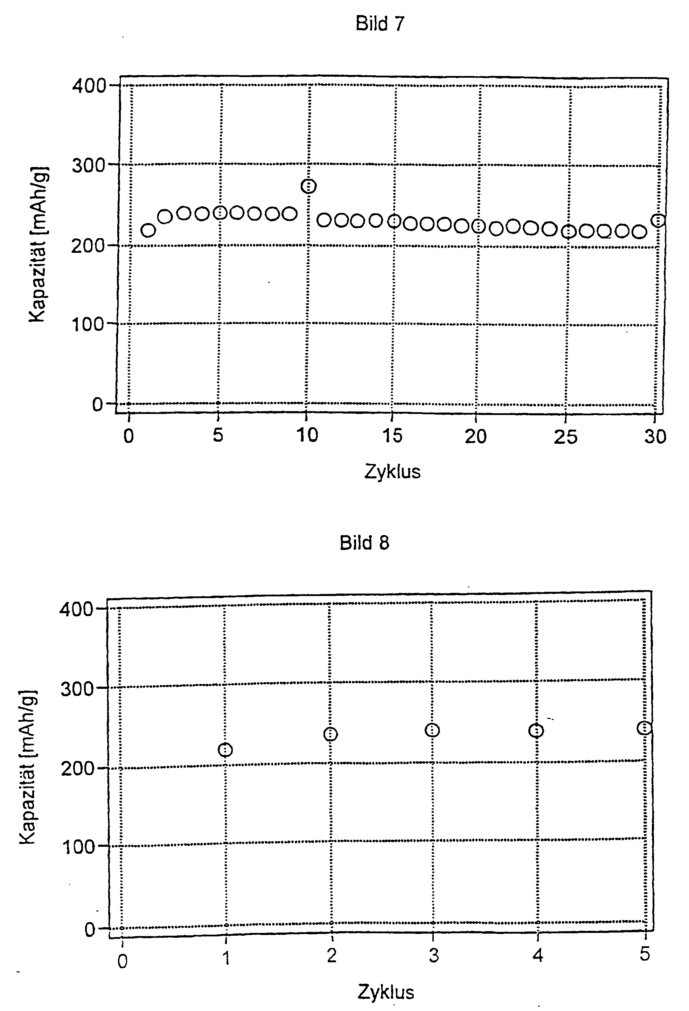

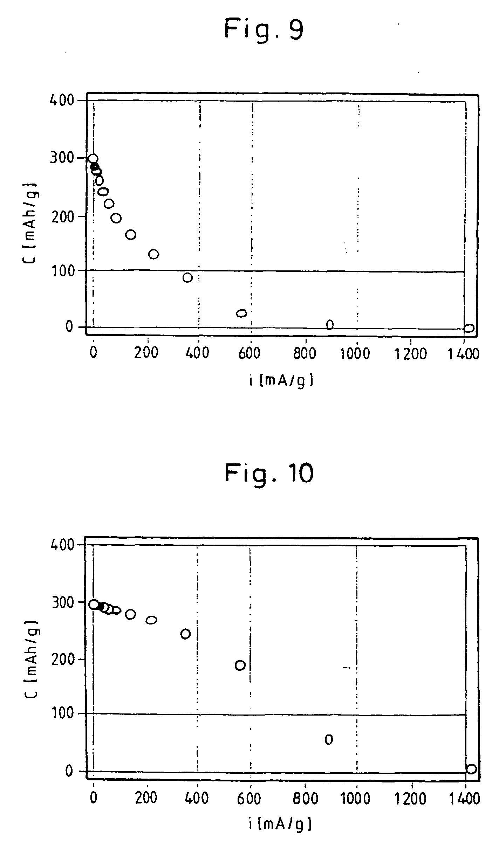

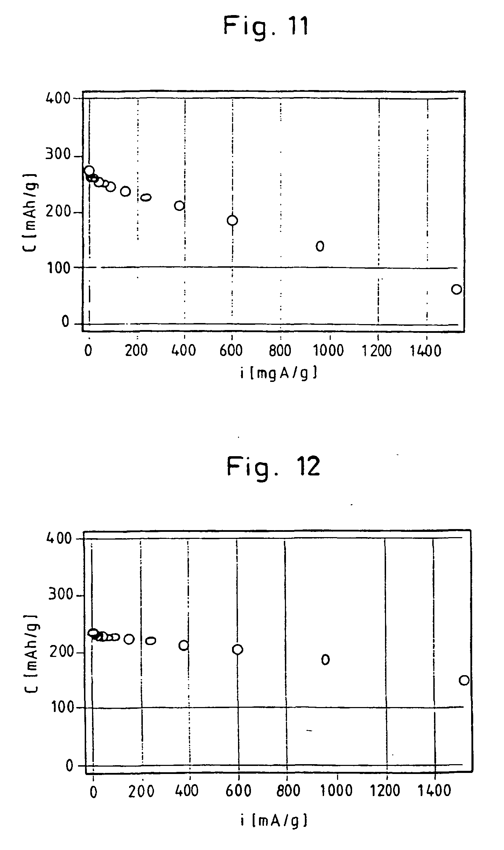

Unter Bezugnahme auf die Figuren 5 bis 12 ist ersichtlich, daß durch die erfindungsgemäß erreichbare Beschleunigung der Wasserstoffaufnahme und -abgabe in den Speicherwerkstoff der Elektrode (Anode) des Akkumulators sowie des Herstellungsverfahrens gemäß der Erfindung die Leistungsdichte und die Stromdichte des Akkumulators mit dem erfindungsgemäß katalysierten Elektrodenwerkstoff im Vergleich zu herkömmlichen Akkumulatoren deutlich erhöht wird. Damit sind die erfindungsgemäß herstellbaren Akkumulatoren für Hochleistungsanwendungen geeignet, die bisher nur Ni-Cd-Elementen auf bzw. -Zellen vorbehalten waren, siehe auch oben Forderungskritierium 6. Zudem können Speicherwerkstoffe für die Elektrode verwendet werden, deren Gleichgewichtsdruck bei den Anwendungsbedingungen geringer ist und die stabilere Hydride als die bisher üblichen ausbilden. Dadurch werden geringere Selbstentladungsraten erzielt, siehe oben Anforderungskriterium 6. Die durch die erfindungsgemäßen Katalysationsmittel erzielbare Beschleunigung der Kinetik kompensiert dabei den Verlust an thermodynamisch treibender Kraft zur Hydrierung/Dehydrierung des Elektrodenwerkstoffs, so daß trotz der größeren Stabilität des Hydrids noch ausreichende Stromdichten für die Anwendung erreicht werden. Die erfindungsgemäßen oxidischen Katalysationsmittel bzw. Katalysationszusätze sind wesentlich preisgünstiger herstellbar bzw. bereitstellbar als die bisher zur Anwendung gelangten Metalle, siehe oben Anforderungskriterium 8. Die bisher übliche Aktivierungsprozedur des Elektrodenwerkstoffs entfällt bei der erfindungsgemäßen Herstellung des metallhaltigen Elektrodenwerkstoffs, siehe oben Anforderungskriterium 5.

Aus den Figuren 5 bis 12 ist ersichtlich, daß das Lade- und Entladeverhalten des Elektrodenwerkstoffs gemäß der Erfindung gegenüber dem entsprechenden Verhalten der bisher bekannten Elektrodenwerkstoffe außerordentlich große Vorteile und Verbesserungen zeigt.

Es ist grundsätzlich möglich den erfindungsgemäßen Elektrodenwerkstoff auch für Elektroden von nichtwiederaufladbaren aber ggf. regenerierbaren Primärelementen bzw. -zellen zu verwenden.

## Patentansprüche

1. Metallhaltiger Werkstoff als hydridbildender Werkstoff in Wasserstoff-Speichern, wobei dieser zur Hydrierung oder Dehydrierung des Wasserstoffspeicherwerkstoffs wenigstens ein Metalloxid als Katalysationsmittel enthält und wobei das Metall des Metalloxids Mg, Ca, Ti, V, Cr, Mn, Fe, Co, Ni, Cu, Zn, Zr, Nb, Mo, Sn, Hf, Ta und W ist und daß das Katalysationsmittel eine nanokristalline Struktur aufweist.

2. Metallhaltiger Werkstoff nach Anspruch 1, **dadurch gekennzeichnet, daß** das Metalloxid ein Mischoxid ist.

3. Metallhaltiger Werkstoff nach einem oder beiden der Ansprüche 1 oder 2, **dadurch gekennzeichnet, daß** dieser eine nanokristalline Struktur aufweist.

4. Verfahren zur Herstellung eines metallhaltigen Werkstoffs als hydridbildender Werkstoff in Wasserstoff-Speichern, wobei ein metallhaltiger Werkstoff und/oder ein Katalysationsmittel, das wenigstens ein Metalloxid ist, und wobei das Metall des Metalloxids Mg, Ca, Ti, V, Cr, Mn, Fe, Co, Ni, Cu, Zn, Zr, Nb, Sn, Hf, Ta und W ist, zum Erhalt eines Metallpulvers derart einem mechanischen Mahlvorgang unterworfen wird bzw. werden, daß der metallhaltige Werkstoff und/oder das Katalysationsmittel eine nanokristalline Struktur erhält bzw. erhalten.

5. Verfahren nach Anspruch 4, **dadurch gekennzeichnet, daß** der Mahlvorgang eine vorbestimmte Zeit lang durchgeführt wird.

6. Verfahren nach einem oder beiden der Ansprüche 4 oder 5, **dadurch gekennzeichnet, daß** der metallhaltige Werkstoff zunächst dem Mahlvorgang unterworfen wird und nachfolgend ebenfalls das Katalysationsmittel.

7. Verfahren nach einem oder beiden der Ansprüche 4 oder 5, **dadurch gekennzeichnet, daß** das Katalysationsmittel zunächst dem Mahlvorgang unterworfen wird und nachfolgend ebenfalls der metallhaltige Werkstoff.

8. Verfahren nach einem oder mehreren der Ansprüche 4 bis 7, **dadurch gekennzeichnet, daß** der Mahlvorgang unter einer Inertgasatmosphäre durchgeführt wird.

9. Verfahren nach Anspruch 8, **dadurch gekennzeichnet, daß** das Inertgas Argon ist.

10. Verfahren nach einem oder mehreren der Ansprüche 4 bis 9, **dadurch gekennzeichnet, daß** die Dauer des Mahlvorganges im Bereich von etwa 1 bis 200 Stunden liegt.

11. Verfahren zur Herstellung eines metallhaltigen Werkstoffs, verwendbar als hydridbildender Elektrodenwerkstoff für Primär- und Sekundärelemente, nach einem oder mehreren der Ansprüche 1 bis 10, wobei ein Katalysationsmittel in Form eines Metalloxids wenigstens auf der Oberfläche des Elektrodenwerkstoffs in situ durch Kontakt mit Sauerstoff aus Elementen des Elektrodenwerkstoffs oder durch direkte Zufuhr von Sauerstoff gebildet wird.

12. Verfahren nach Anspruch 11, **dadurch gekennzeichnet, daß** die Oberfläche des Elektrodenwerkstoffs vor Ausbildung des Oxids chemisch aktiviert wird.

13. Verfahren nach Anspruch 11, **dadurch gekennzeichnet, daß** die Oberfläche des Elektrodenwerkstoffs vor Ausbildung des Oxids mechanisch aktiviert wird.

## Claims

1. Metalliferous material in the form of a hybrid-forming material in hydrogen storage devices, containing at least one metal oxide as a catalyst for hydrogenating and dehydrogenating the hydrogen storage material and in which the metal of the metal oxide is Mg, Ca, Ti, V, Cr, Mn, Fe, Co, Ni, Cu, Zn, Zr, Nb, Mo, Sn, Hf, Ta and W and the catalyst has a nano-crystalline structure.

2. Metalliferous material as claimed in claim 1, **characterised in that** the metal oxide is a mixed oxide.

3. Metalliferous material as claimed in one or both of claims 1 or 2, **characterised in that** it has a nano-crystalline structure.

4. Method of producing a metalliferous material in the form of a hybrid-forming material in hydrogen storage devices, whereby a metalliferous material and/or a catalyst which is at least one metal oxide, the metal of the metal oxide being Mg, Ca, Ti, V, Cr, Mn, Fe, Co, Ni, Cu, Zn, Zr, Nb, Mo, Sn, Hf, Ta and W, is or are subjected to a mechanical grinding process to obtain a metal powder, which metalliferous material and/or catalyst contains or have a nano-crystalline structure.

5. Method as claimed in claim 4, **characterised in that** the grinding process is run for a pre-defined time.

6. Method as claimed in one or both of claims 4 or 5, **characterised in that** the metalliferous material is subjected to the grinding process first of all and afterwards likewise the catalyst.

7. Method as claimed in one or both of claims 4 or 5, **characterised in that** the catalyst is subjected to the grinding process first of all and afterwards likewise the metalliferous material.

8. Method as claimed in one or more of claims 4 to 7, **characterised in that** the grinding process is operated in an inert gas atmosphere.

9. Method as claimed in claim 8, **characterised in that** the inert gas is argon.

10. Method as claimed in one or more of claims 4 to 9, **characterised in that** the duration of the grinding process is in the range of approximately 1 to 200 hours.

11. Method of producing a metalliferous material which can be used as a hybrid-forming electrode material for primary and secondary elements, as claimed in one or more of claims 1 to 10, whereby a catalyst in the form of a metal oxide is formed in situ at least on the surface of the electrode material by means of contact with oxygen from elements of the electrode material or oxygen introduced directly.

12. Method as claimed in claim 11, **characterised in that** the surface of the electrode material is chemically activated prior to forming the oxide.

13. Method as claimed in claim 11, **characterised in that** the surface of the electrode material is mechanically activated prior to forming the oxide.

## Revendications

1. Matériau contenant du métal comme matériau formant des hybrides dans des accumulateurs d'hydrogène, lequel contient au moins un oxyde de métal comme agent de catalyse pour l'hydratation ou la déshydratation du matériau d'accumulation d'hydrogène et dans lequel le métal de l'oxyde de métal est du Mg, Ca, Ti, V, Cr, Mn, Fe, Co, Ni, Cu, Zn, Zr, Nb, Mo, Sn, Hf, Ta, et W, et dans lequel l'agent de catalyse présente une structure nanocristalline.

2. Matériau contenant du métal selon la revendication 1, **caractérisé en ce que** l'oxyde de métal est un oxyde mixte.

3. Matériau contenant du métal selon l'une ou l'autre des revendications 1 ou 2 ou selon les deux, **caractérisé en ce que** celui-ci présente une structure nanocristalline.

4. Procédé pour fabriquer un matériau contenant du métal comme substance formant des hybrides dans des accumulateurs d'hydrogène, dans lequel un matériau contenant du métal et/ou un agent de catalyse, qui est au moins un oxyde de métal, et dans lequel le métal est du Mg, Ca, Ti, V, Cr, Mn, Fe, Co, Ni, Cu, Zn, Zr, Nb, Sn, Hf, Ta, et W, est (sont) soumis à une opération de broyage mécanique pour obtenir une poudre métallique de sorte que le matériau contenant du métal et/ou l'agent de catalyse reçoit (reçoivent) une structure nanocristalline.

5. Procédé selon la revendication 4, **caractérisé en ce que** l'opération de broyage est exécutée pendant un temps prédéterminé.

6. Procédé selon l'une ou l'autre des revendications 4 ou 5 ou selon les deux, **caractérisé en ce que** tout d'abord le matériau contenant du métal est soumis à l'opération de broyage, suivi ensuite aussi de l'agent de catalyse.

7. Procédé selon l'une ou l'autre des revendications 4 ou 5 ou selon les deux, **caractérisé en ce que** tout d'abord l'agent de catalyse est soumis à l'opération de broyage, suivi ensuite aussi du matériau contenant du métal.

8. Procédé selon l'une ou plusieurs des revendications 4 à 7, **caractérisé en ce que** l'opération de broyage est exécutée dans une atmosphère de gaz inerte.

9. Procédé selon la revendication 8, **caractérisé en ce que** le gaz inerte est de l'argon.

10. Procédé selon l'une ou plusieurs des revendications 4 à 9, **caractérisé en ce que** la durée de l'opération de broyage se trouve dans la plage d'environ 1 à 200 heures.

11. Procédé pour fabriquer un matériau contenant du métal, pouvant être utilisé comme matériau d'électrode formant des hybrides pour des éléments primaires et secondaires selon l'une ou plusieurs des revendications 1 à 10, dans lequel un agent de catalyse sous forme d'un oxyde de métal est formé au moins sur la surface du matériau d'électrode in situ par contact avec de l'oxygène provenant d'éléments du matériau d'électrode ou par apport direct d'oxygène.

12. Procédé selon la revendication 11, **caractérisé en ce que** la surface du matériau d'électrode est activée chimiquement avant la réalisation de l'oxyde.

13. Procédé selon la revendication 11, **caractérisé en ce que** la surface du matériau d'électrode est activée mécaniquement avant la réalisation de l'oxyde.
